# FASCICULE DE BREVET EUROPEEN

(11) **EP 1 509 707 B1**
(45) Date de publication et mention de la délivrance du brevet: **12.07.2006**
(21) Numéro de dépôt: 03755164.5
(22) Date de dépôt: 13.05.2003
(51) Int. Cl.: F16H 3/54, F16D 25/10, F16H 37/04

(54) **DISPOSITIF DE TRANSMISSION, POUR VEHICULE TERRESTRE, NOTAMMENT VOITURETTE**
ÜBERTRAGUNGSVORRICHTUNG FÜR EIN LANDFAHRZEUG, WIE ZUM BEISPIEL EINEN KLEINEN WAGEN
TRANSMISSION DEVICE FOR A LAND VEHICLE, SUCH AS A CART

(30) Priorité: 23.05.2002 FR 0206319
(43) Date de publication de la demande: 02.03.2005
(73) Titulaire: Antonov Automotive Technologies B.V., 3013 CH Rotterdam (NL)
(72) Inventeur: ANTONOV, Roumen, F-75006 Paris (FR); DAZIN, Guillaume, F-95690 Nesles La Vallee (FR)
(74) Mandataire: Pontet, Bernard
(86) Numéro de dépôt international: PCT/FR2003/001448
(87) Numéro de publication internationale: WO 2003/100292

(56) Documents cités:
- EP-A- 0 390 335
- EP-A- 0 683 877
- DE-C- 488 062
- FR-A- 2 817 009
- US-A- 3 860 101
- US-A- 4 128 023
- US-A- 4 240 534
- US-A- 4 649 771
- US-A- 5 489 013

## Description

La présente invention concerne un dispositif de transmission pour véhicule terrestre et en particulier pour petit véhicule automobile, tel qu'une voiturette dite "sans permis". On nomme voiturette les véhicules légers, ayant un moteur de cylindrée et/ou de puissance réduite et/ou une vitesse maximale limitée, et qui selon les législations nationales peuvent dans certains pays être pilotées par des personnes qui ne sont pas titulaires d'un permis de conduire.

L'invention concerne plus particulièrement un dispositif de transmission ayant une structure particulièrement simple par rapport au nombre de rapports de transmission offerts.

La quasi-totalité des dispositifs de transmission automatique utilisent des mécanismes différentiels et notamment des trains épicycloïdaux dans lesquels des moyens d'accouplement sélectif tels que des freins, des embrayages et/ou des roues libres permettent de changer le rapport de transmission fourni par chaque train élémentaire. D'une manière classique, un train épicycloïdal fournit l'un ou l'autre de deux rapports dont l'un est un rapport de prise directe obtenu au moyen d'un embrayage qui solidarise deux éléments rotatifs inter-engrenés du train. Il existe des trains épicycloïdaux fournissant plus de deux rapports mais ce sont alors, en général, des trains épicycloïdaux dits "complexes", c'est à dire comportant plus de trois éléments rotatifs inter-engrenés et qui sont en fait équivalents à au moins deux trains épicycloïdaux élémentaires. Par conséquent, pour réaliser un dispositif de transmission à trois rapports, il faut actuellement deux trains épicycloïdaux élémentaires.

En outre, la commande automatique est particulièrement complexe et coûteuse à réaliser.

On connaît d'après le EP-A-0 683 877 un dispositif de transmission automatique dans lequel la commande automatique est simplifiée grâce à l'exploitation de la poussée axiale des dentures hélicoïdales, à la fois comme une mesure du couple transmis et comme une force d'actionnement proportionnelle à ce couple. Cette force maintient ouvert un embrayage de prise directe entre l'élément d'entrée et l'élément de sortie du train épicycloïdal lorsque le train épicycloïdal fonctionne en réducteur. Pendant ce temps, le troisième élément du train est immobilisé par une roue libre. La fermeture de l'embrayage de prise directe intervient sous l'action de masselottes centrifuges lorsque la vitesse de rotation est suffisante pour leur permettre de surmonter la poussée axiale de denture.

Avec ce dispositif connu, la commande est certes simplifiée et moins consommatrice d'énergie, mais là encore un train épicycloïdal simple ne fournit que deux rapports. Le brevet DE-C-488 062 montre un dispositif de transmission avec les charactéristiques suivant le préambule de la revendication 1.

Bien qu'un train épicycloïdal puisse en théorie fournir d'assez nombreux rapports de transmission, il n'a pas été pratiquement réalisable d'en obtenir plus de deux, compte-tenu de la complexité impliquée par le passage de l'un à l'autre de deux rapports.

Le but de la présente invention est de proposer un dispositif de transmission dans lequel les moyens nécessaires pour passer d'un rapport à l'autre dans un mécanisme différentiel sont considérablement simplifiés.

Un autre but de la présente invention est de proposer un dispositif de transmission dans lequel un mécanisme différentiel simple, c'est à dire à seulement trois éléments inter-engrenés, est capable de fournir plus de deux rapports de transmission.

Encore un autre but de la présente invention est de proposer un dispositif de transmission permettant d'offrir de nombreux rapports avec une structure particulièrement simple et un rendement mécanique amélioré.

Un but supplémentaire est de proposer un dispositif de transmission particulièrement léger et économique à fabriquer.

Suivant l'invention, pour satisfaire tout ou partie de ces buts, le dispositif de transmission automatique, en particulier pour véhicule terrestre, comprend :
- un élément rotatif d'entrée et un élément rotatif de sortie;
- un premier et un deuxième élément dentés qui engrènent chacun avec un troisième élément denté;
- des premier et deuxième moyens de liaison pour lier sélectivement un premier des éléments rotatifs d'entrée et de sortie avec le premier et respectivement le deuxième élément denté;
- un troisième moyen de liaison pour lier le deuxième des éléments rotatifs d'entrée et de sortie avec le troisième élément denté;
- des premier et deuxième moyens d'arrêt pour immobiliser sélectivement le premier et respectivement le deuxième élément denté;
- un premier organe d'actionnement pour le premier moyen de liaison; et
- un deuxième organe d'actionnement capable d'une première position dans laquelle le premier moyen de liaison est capable d'un état de prise et d'un état de désaccouplé, et le deuxième moyen de liaison est désaccouplé, et d'une deuxième position dans laquelle le premier moyen de liaison est désaccouplé et le deuxième moyen de liaison est en état de prise.

Le dispositif de transmission selon l'invention permet de réaliser facilement trois rapports avec un seul train planétaire. Pour cela, le premier élément rotatif, qui est typiquement l'élément rotatif d'entrée (par exemple arbre d'entrée) est lié par le premier moyen de liaison avec le premier élément denté ou par le deuxième moyen de liaison avec le deuxième élément, ou simultanément par le premier et le deuxième moyens de liaison avec le premier et le deuxième élément denté, de façon à réaliser une prise directe.

Un quatrième état, dans lequel le premier et le deuxième moyen de liaison sont désaccouplés, peut correspondre à un point mort.

Le deuxième organe d'actionnement prévu selon l'invention permet, dans sa première position, le choix entre le point mort et le premier rapport de transmission, au moyen du premier organe d'actionnement, et dans sa deuxième position, correspond au deuxième rapport de transmission, dans laquelle le premier moyen de liaison est désaccouplé et le deuxième moyen de liaison est en état de prise.

De préférence, dans la deuxième position, pour assurer le désaccouplement du premier moyen de liaison, le deuxième organe d'actionnement exerce sur le premier organe d'actionnement une poussée par l'intermédiaire du premier moyen de liaison. Ainsi, la force appliquée au deuxième organe d'actionnement sert à la fois à placer le deuxième moyen de liaison en état de prise et à solliciter le premier organe d'actionnement dans le sens du désaccouplement du premier moyen de liaison.

Dans un mode de réalisation préféré, le deuxième organe d'actionnement est capable d'une troisième position dans laquelle le premier et le deuxième moyen de liaison sont en état de prise.

On réalise de préférence cette fonction en déplaçant le deuxième organe d'actionnement au-delà de sa deuxième position pour qu'il vienne solliciter un troisième organe d'actionnement qui pousse le premier moyen de liaison contre le premier organe d'actionnement, lequel rencontre une butée et sert alors de contre-appui.

En même temps, il est préféré que le premier organe d'actionnement soit associé à un premier moyen de commande adapté pour la mise en mouvement progressive du véhicule. On supprime ainsi un embrayage d'entrée entre le moteur et le dispositif de transmission, ce qui représente une économie substantielle de poids, de coût et d'encombrement. Ce premier moyen de commande est de préférence de type centrifuge. Il peut solliciter le premier moyen de liaison à l'encontre d'un ressort de rappel, mais cela n'est pas indispensable. On peut au contraire préférer un certain "léchage" dans le premier moyen de liaison lorsque le moteur est à son régime de ralenti ce qui permet de faire avancer le véhicule à très faible vitesse lorsque le moteur tourne au ralenti. Le conducteur peut empêcher ce mouvement très lent en actionnant la pédale de frein.

Le premier et le deuxième moyen d'arrêt sont de préférence des roues libres (encore appelées "accouplements unidirectionnels") qui ont l'avantage de ne nécessiter aucune commande spécifique.

Il peut enfin être prévu des moyens de marche arrière qui, en même temps qu'ils sont actionnés, maintiennent directement ou indirectement, le deuxième organe d'actionnement dans sa première position. On empêche ainsi le dispositif de transmission d'établir des rapports de transmission élevés lors du fonctionnement en marche arrière.

D'autres particularités et avantages de l'invention ressortiront encore de la description ci-après, relatives à un exemple non limitatif.

Aux dessins annexés:
- la figure 1 est une demi-vue en coupe axiale d'un dispositif de transmission automatique selon l'invention, au point mort;
- la figure 2 est une vue en coupe axiale d'un dispositif selon la figure 1, (excepté que les moyens de marche arrière n'y sont plus représentés), et qui est en situation de fonctionnement en première vitesse; et
- les figures 3 et 4 sont des demi-vues analogues à la partie supérieure de la figure 2, mais lorsque le dispositif fonctionne en deuxième et respectivement troisième vitesse.

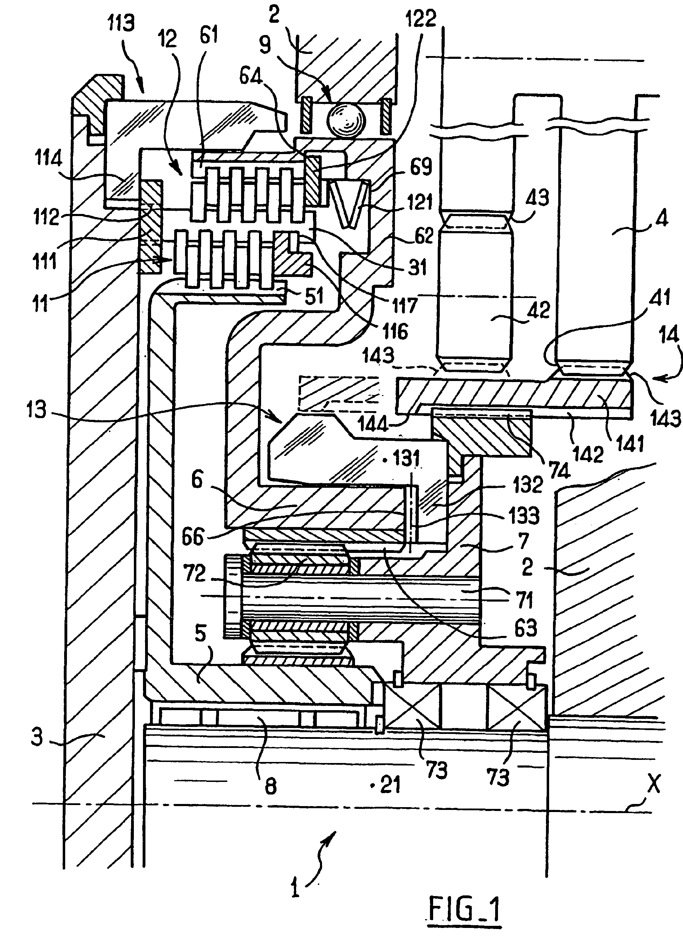

Dans l'exemple représenté à la figure 1, le dispositif de transmission est essentiellement composé d'un mécanisme différentiel 1 comprenant:
- un élément de bâti 2, qui n'est que partiellement représenté et comprend en particulier un arbre statorique 21, immobile en translation et en rotation, s'étendant suivant l'axe général X du mécanisme;
- un élément rotatif d'entrée 3, immobilisé en translation par rapport à l'élément de bâti 2 et comprenant dans l'exemple représenté un disque centré sur l'axe général X au-delà d'une extrémité de l'arbre statorique 21, ce disque étant destiné à être relié directement ou indirectement, de manière non représentée, à l'arbre d'un moteur d'entraînement d'un véhicule;
- un élément rotatif de sortie 4 destiné à être relié au moins indirectement aux roues du véhicule;
- un élément rotatif planétaire 5 agencé suivant l'axe X autour de l'arbre statorique 21 et pouvant tourner par rapport à celui-ci autour de l'axe X;
- un élément rotatif formant couronne 6 monté rotatif autour de l'axe X et agencé autour de l'élément planétaire 5 et de l'arbre statorique 21,
- un élément rotatif formant porte-satellitess 7 portant, régulièrement répartis autour de l'axe X, des tourillons 71 excentrés par rapport à l'axe général X, sur lesquels tournent librement des satellites 72 qui engrènent à la fois avec l'élément planétaire 5 et la couronne 6, de façon à former avec ceux-ci un train épicycloïdal;
- une première roue libre 8, qui interdit à l'élément planétaire 5 de tourner en sens inverse de celui de l'élément d'entrée 3 par rapport à l'élément de bâti 2;
- une deuxième roue libre 9 qui interdit à la couronne 6 de tourner en sens inverse de celui de l'élément d'entrée 3 par rapport à l'élément de bâti 2;
- un premier moyen de liaison par friction. 11, accouplant sélectivement en rotation autour de l'axe X l'élément d'entrée 3 et l'élément planétaire 5;
- un deuxième moyen de liaison par friction 12, accouplant sélectivement en rotation autour de l'axe X l'élément d'entrée 3 et la couronne 6;

Les moyens de liaison par friction 11 et 12 sont des embrayages multi-disques à bain d'huile. Pour leur constitution, l'élément d'entrée 3 comprend une série de lamelles 31 qui forment une couronne autour de l'axe X en étant dirigées axialement. La couronne de lamelles 31 entoure des cannelures extérieures 51 solidaires de la roue planétaire 5, et est entourés par des cannelures intérieures 61 solidaires de la couronne 6. Le premier moyen de liaison par friction 11 comprend un empilement de disques qui sont alternativement liés en rotation avec les lamelles 31 et avec les cannelures 51. Le deuxième moyen de liaison par friction 12 comprend un empilement de disques qui sont alternativement liés en rotation avec les lamelles 31 et avec les cannelures 61.

Le dispositif de transmission comprend en outre un premier organe d'actionnement 111 constitué par une bague centrée autour de l' axe, X, et qui présente des passages 112 à travers lesquels s'étendent les lamelles 31. Le premier organe d'actionnement 111 est monté axialement coulissant sur les lamelles 31.

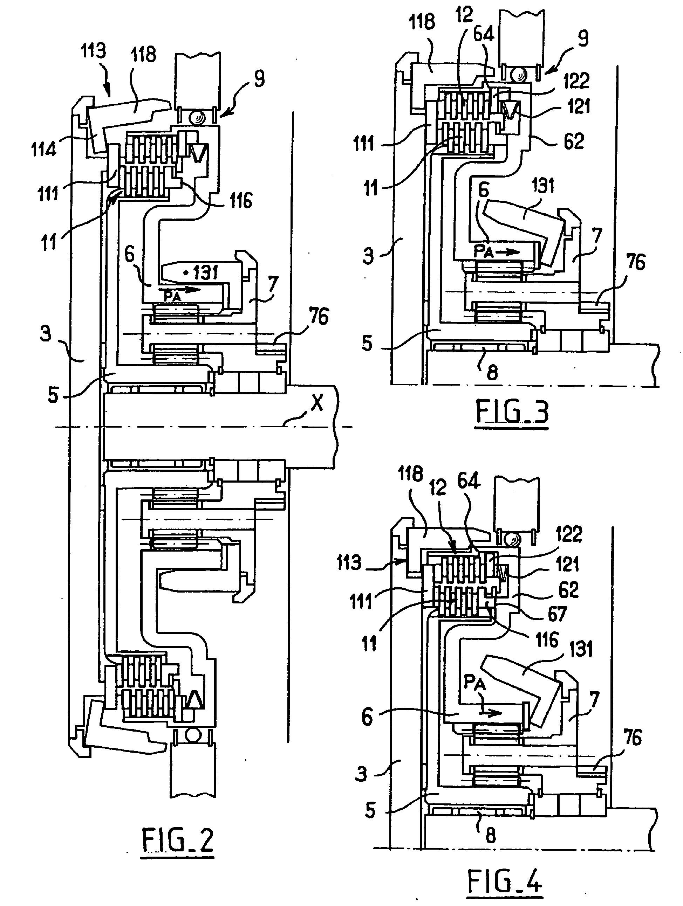

Il est en outre prévu un premier moyen de commande 113 sous la forme d'une série de masselottes centrifuges 118 réparties autour de l'axe X et entraînées en rotation autour de l'axe X par l'élément rotatif d'entrée 3. Sous l'effet de la force centrifuge développée par la rotation de l'élément d'entrée 3 autour de l'axe X, les masselottes peuvent pivoter de la position de repos représentée à une position soulevée visible à la figure 2. Dans la position de repos des masselottes 118, le premier organe d'actionnement 111 peut lui-même être en position de repos en butée contre la face radiale de l'élément 3 d'où partent les lamelles 31. Par contre, lorsque les masselottes 118 sont dans la position soulevée représentée à la figure 2, le premier organe d'actionnement 111 est poussé contre la pile de disques du premier moyen de liaison 11 par un talon 114 de chaque masselotte.

Le dispositif de transmission comprend en outre un deuxième organe d'actionnement constitué par une coupelle 62 qui coiffe les moyens de liaison 11 et 12 du côté opposé au premier organe d'actionnement 111. La coupelle 62 est solidaire de la couronne 6, laquelle peut coulisser parallèlement à l'axe de X. Les dents 63 de la denture de la couronne 6 sont réalisées axialement suffisamment longues pour que l'engrènement avec les satellites 72 soit complet quelle que soit la position axiale de la couronne 6. Le deuxième moyen d'actionnement 62 comprend en outre une bague 122 comportant sur sa périphérie extérieure des dents qui sont engagées dans les cannelures 61. Un ressort de compression 121 est interposé entre la bague 122 et une face 69 solidaire de la couronne 6. Le ressort 121 repousse la bague 122 vers les disques et vers le premier organe d'actionnement 111. Les dents de la bague 122 sont radialement plus longues que celles des disques solidaires de la couronne 6. A l'état de repos du ressort 121, celui-ci pousse la bague 122 jusqu'à ce que les dents prolongées de la bague 122 butent contre un épaulement 64 de la couronne 6 sous une précontrainte prédéterminée. L'épaulement 64 forme une transition entre une région plus profonde des cannelures 61, où est emprisonnée axialement la bague 122, et la région moins profonde capable de recevoir les dents des disques du moyen de liaison 12.

Le dispositif de transmission comprend en outre un troisième organe de commande 116 constitué par une bague montée coulissante sur le côté radialement intérieur des lamelles 31, du côté axialement opposé au premier organe d'actionnement 111 par rapport à l'empilement de disques du premier moyen de liaison par friction 11. Le troisième organe d'actionnement 116 est empêché de s'échapper des lamelles 31 grâce à une bague d'arrêt 117 fixée sur les lamelles 31. A partir de la position limite définie par la bague d'arrêt 117, le troisième organe de commande 116 peut coulisser sur les lamelles 31 pour pousser l'empilement de disques du premier moyen de liaison 11 vers le premier organe d'actionnement 111.

Le dispositif de transmission comprend en outre un deuxième moyen de commande 13 comprenant des masselottes centrifuges 131 qui sont entraînées en rotation autour de l'axe X par le porte-satellites 7, et donc à une vitesse proportionnelle à la vitesse de rotation de l'élément de sortie 4. Les masselottes 131 comportent un talon 132 qui est appuyé contre une face terminale 66 de la couronne 6 par l'intermédiaire d'une butée axiale 133 car la vitesse de rotation du porte-satellites 7, et donc des masselottes 131, autour de l'axe X est en général différente de celle de la couronne 6.

Lorsque les masselottes 131 sont au repos (situation représentée à la figure 1), la distance entre la bague 122 appuyée contre l'épaulement 64 et le premier organe de commande 111 est telle que le deuxième moyen de liaison par friction 12 est à l'état désaccouplé. Lorsque les masselottes 131 se soulèvent sous l'action de la force centrifuge comme le montrent les figures 3 et 4 qui sont décrites en détail plus loin, la couronne 6 et en particulier le deuxième moyen d'actionnement comprenant la coupelle 62 sont poussés vers le premier organe d'actionnement 111 et donc dans le sens tendant à comprimer l'empilement de disques du deuxième moyen de liaison par friction 12.

Les dentures du train épicycloïdal constituées par la roue planétaire 5, la couronne 6 et les satellites 72 montés en rotation sur leur porte-satellites 7, sont hélicoïdales et le sens d'inclinaison de leurs dentures est choisi pour que la réaction axiale de dentures prenant naissance dans les dents 63 de la couronne 6 lors de la transmission d'un couple moteur soit orientée dans le sens tendant à relâcher le deuxième moyen de liaison par friction 12 et à rabattre les masselottes 131. Cette poussée axiale est représentée par la flèche P_{A} à la figure 2.

Dans l'exemple représenté à la figure. 1, le dispositif de transmission est en outre équipé d'un système de marche arrière 14 comprenant un crabot 141 qui est lié en rotation autour de l'axe X avec le porte-satellites 7, mais qui peut coulisser axialement par rapport au porte-satellites 7 grâce à des moyens de commande manuelle non représentés. Pour permettre ce coulissement par rapport au porte-satellites 7 qui est immobilisé axialement par des paliers 73 sur l'arbre statorique 21, le porte-satellites et le crabot 141 sont munis de cannelures 74, 142 inter-engagées. Sur sa face radialement extérieure, le crabot 141 porte une denture 143 qui dans la position de marche avant représentée en trait plein à la figure 1, engrène avec une denture correspondante 41 de la sortie 4. Dans la position de marche arrière représentée partiellement en pointillés, la denture 143 engrène avec un pignon inverseur 42 qui engrène à son tour avec une seconde denture 43 de la sortie 4. En outre, le crabot 141 comporte une région de butée 144 qui, lorsque le crabot 141 est en position de marche arrière, vient se placer autour des masselottes 131, comme représenté en pointillés à la figure 1, en les empêchant de quitter leur position de repos rabattue. Ceci empêche comme on le comprendra mieux plus loin, le dispositif de transmission de fonctionner autrement qu'au point mort ou selon son premier rapport de transmission lorsque le crabot 141 est en position de marche arrière.

On va maintenant décrire plus en détail le fonctionnement du dispositif de transmission.

Dans la situation représentée à la figure 1, l'élément rotatif d'entrée 3 est à l'arrêt, de sorte que les masselottes 118 sont rabattues. Les masselottes 131 du deuxième moyen de commande 13 sont également rabattues. Les deux moyens de liaison par friction 11 et 12 sont à l'état désaccouplé de sorte que l'élément rotatif d'entrée 3 est libre en rotation par rapport à l'élément de sortie 4, ce qui correspond à une situation de point mort. Cependant, le véhicule est empêché de se déplacer en marche arrière, par exemple le long d'une rue en pente si le frein de stationnement est mal serré car le porte-satellites 7 ne pourrait tourner dans le sens de la marche arrière sans entraîner dans le même sens la roue planétaire 5 et/ou la couronne 6, qui ne peuvent ni l'une ni l'autre effectuer une telle rotation car elles en sont empêchées par les roues libres 8 et 9 respectivement. Ceci favorise les démarrages en côte, alors que ceux-ci sont généralement un exercice difficile pour des conducteurs de voiturette qui ont parfois une expertise limitée de la conduite automobile.

De même, si le crabot 141 est poussé en position de marche arrière, le véhicule est pour des raisons semblables à celles déjà décrites empêché de se déplacer en marche avant. Ceci favorise les opérations de démarrage en côte en marche arrière.

A partir de cette situation, si le conducteur fait démarrer le moteur, l'élément rotatif d'entrée 3 lié directement ou indirectement (c'est-à-dire par l'intermédiaire d'une courroie ou d'un système d'engrenage) mais de manière permanente au moteur du véhicule, se met en rotation et les masselottes du premier moyen de commande 113 se soulèvent comme représenté à la figure 2; ceci tend à comprimer les disques du premier moyen de liaison 11 contre le troisième organe d'actionnement 116 mais sans que la partie radialement extérieure du premier organe d'actionnement 111 vienne s'appuyer contre l'empilement de disques du deuxième moyen de liaison par friction 12. Lorsque l'élément rotatif d'entrée 3 tourne autour de l'axe X à une vitesse de rotation correspondant au ralenti du moteur, la force centrifuge dans les masselottes est si faible qu'il se produit simplement dans le premier moyen de liaison par friction 11 "un léchage" qui peut éventuellement provoquer une certaine rotation de la roue planétaire 5. Si le conducteur du véhicule provoque une augmentation de la vitesse de rotation du moteur, la force centrifuge dans les masselottes du premier organe de commande 113 augmente progressivement et le serrage croissant du premier moyen de liaison par friction 11 fait progressivement apparaître une solidarisation en rotation entre l'élément rotatif d'entrée 3 et l'élément planétaire 5. Comme le porte-satellites 7 tend à être immobilisé par la charge à entraîner, la rotation de l'élément planétaire 5 tend à provoquer une rotation en sens inverse de la couronne 6 mais cela est empêché par la deuxième roue libre 9 de sorte que la couronne 6 est immobilisée et le porte-satellites 7 est entraîné en rotation dans le même sens que l'élément planétaire 5 mais à une vitesse fortement réduite par rapport à celle de l'élément planétaire 5.

En même temps, la vitesse de rotation de l'élément de sortie 7 ne génère pas dans les masselottes 131 une force centrifuge suffisante pour vaincre l'action contraire de la poussée axiale P_{A}. Ce fonctionnement correspond au premier rapport de transmission.

Si la vitesse de rotation du porte-satellites 7 augmente, les masselottes 131 finissent par se soulever comme représenté à la figure 3 et à pousser la couronne 6 dans le sens de la compression du deuxième moyen de liaison par friction 12 contre le premier organe d'actionnement 111. Cette force est inférieure à la force de précontrainte des ressorts 121 de sorte que la bague 122 appuyée contre l'épaulement 64 se déplace d'un seul bloc avec la coupelle 62 solidaire de la couronne 6.

Au début de ce déplacement, l'excédent de force axiale produit par les masselottes 131 par rapport à la poussée axiale P_{A} est très faible, juste suffisant pour produire un léchage dans le moyen de liaison par friction 12. Mais ce léchage fait diminuer la force transmise par l'élément planétaire 5 et fait donc diminuer la poussée axiale P_{A}. Ainsi, progressivement, la force axiale dans le sens du serrage du moyen de liaison par friction 12 devient de plus en plus grande jusqu'à ce que comme représenté à la figure 3, non seulement le moyen de liaison par friction 12 est serré contre le premier organe d'actionnement 111 mais finalement celui-ci est repoussé en butée contre le disque de l'élément rotatif d'entrée 3, ce qui desserre le premier moyen de liaison par friction 11. Par conséquent, le mouvement de l'élément rotatif d'entrée 3 est transmis non plus à l'élément planétaire 5 mais à la couronne 6. C'est désormais l'élément planétaire 5 qui tend à tourner en inverse mais qui est empêché de le faire par sa roue libre 8, de sorte que le porte-satellites 7 est entraîné à une nouvelle vitesse de rotation qui est plus grande, par rapport à la vitesse de l'élément d'entrée 3, que dans le fonctionnement selon le premier rapport.

En fait, comme toujours lors du passage à un rapport de transmission plus élevé dans un véhicule, c'est en fait la vitesse de l'élément d'entrée 3 qui diminue pour s'adapter au nouveau rapport de transmission, puisque l'inertie de la charge constituée par le véhicule en déplacement s'oppose à une modification significative de la vitesse de rotation de la sortie (donc du porte-satellites 7 dans l'exemple) pendant le processus de changement de rapport. Cette diminution de la vitesse de l'élément rotatif d'entrée 3 au cours du processus de changement de rapport réduit la force centrifuge dans les masselottes 118 et favorise donc le rabattement des masselottes 118 par la poussée exercée par le deuxième organe d'actionnement 62 via le deuxième moyen de liaison par friction 12 sur le premier organe d'actionnement 111.

Si la vitesse de la sortie et. par conséquent du porte-satellites 7 continue d'augmenter, les masselottes 131 finissent par se soulever davantage que dans la situation présentée à la figure 3, comme le montre la figure 4, ce qui pousse davantage vers la gauche la coupelle 62, en raison du dépassement du seuil d'effort puis de la compression du ressort 121. La bague 122 s'écarte de l'épaulement 64 et une face d'appui 67 de la coupelle 62 vient pousser le troisième organe d'actionnement 116 vers le premier organe d'actionnement 111 avec compression du premier moyen de liaison par friction 11. Ce mouvement, une fois qu'il s'est amorcé, ne peut que s'amplifier car il correspond à une nouvelle diminution de la poussée P_{A}. En effet, une partie du couple est alors transmise par la roue planétaire 5 ce qui réduit d'autant la part transmise par la denture de la couronne 6.

Dans cette nouvelle situation, les deux moyens de liaison par friction 11 et 12 sont en état de prise, et relient ensemble l'élément d'entrée 3 la couronne 6 et l'élément planétaire 5, ce qui constitue une situation de prise directe. Le porte-satellites 7 tourne lui aussi à la vitesse de rotation commune de l'élément d'entrée 3, de l'élément planétaire 5 et de la couronne 6. Les masselottes 118 du premier moyen de commande 113 demeurent à l'état rabattu.

Au cours des différents processus de changement de rapport dans le sens de la diminution de la vitesse de l'élément d'entrée 3 par rapport à celle du porte-satellites 7, la réduction progressive, au cours de chaque processus de changement, de la poussée axiale qui tend à s'opposer à ce changement, à pour effet de stabiliser le nouveau rapport de transmission dès qu'il a commencé à s'instaurer. Par conséquent, pour un couple moteur égal, le changement inverse ne pourra avoir lieu qu'à une vitesse de rotation inférieure du porte-satellites 7.

Les changements inverses s'effectuent de la façon suivante:
- du troisième vers le deuxième rapport, le changement s'initie lorsqu'un patinage commence à apparaître dans le premier moyen de liaison par friction 11 lorsque la force générée par les masselottes 131 est à peine surabondante pour à la fois vaincre la poussée P_{A} et comprimer les ressorts 121. Ce patinage provoque le ralentissement de l' élément planétaire 5 jusqu'à ce que celui-ci soit immobilisé par sa roue libre 8. Cette immobilisation fait augmenter la poussée axiale P_{A} et ainsi les masselottes 131 sont repoussées dans leur position correspondant à la figure 3 avec détente du ressort 121 dans sa position de précontrainte minimale.
- à partir de cette situation, si la force des masselottes 131 diminue encore et devient insuffisamment excédentaire par rapport à la poussée axiale P_{A} pour suffisamment comprimer le second moyen de liaison par friction 12 compte-tenu du couple moteur à transmettre entre l'élément d'entrée 3 et la couronne 6, le second moyen de liaison par friction 12 commence à patiner, jusqu'à ce qu'il soit immobilisé par sa roue libre 9. Ceci tend à provoquer un emballement de l'élément d'entrée 3, donc une augmentation de la force centrifuge produite par les masselottes 118 et ainsi une remise en prise du premier moyen de liaison par friction 11, conformément au fonctionnement en première vitesse. La poussée axiale P_{A} augmente et rabat complètement les masselottes 131, pour aboutir à la situation représentée à la figure 2.

Le dispositif de transmission qui vient d'être décrit a l'avantage, malgré sa grande simplicité, d'offrir la caractéristique de fonctionnement dite "KICK-DOWN" qui permet au conducteur de provoquer le changement pour un rapport inférieur par simple enfoncement de la pédale d'accélérateur. En effet, ceci provoque une augmentation de la poussée P_{A}.

Lorsque le porte-satellites 7 tend à tourner plus vite que l'élément d'entrée 3 (fonctionnement en retenue), c'est-à-dire lorsque le conducteur du véhicule relâche la pédale d'accélérateur ou lors d'un trajet en descente, le couple de rotation appliqué à l'élément d'entrée 3 devient négatif, la poussée axiale P_{A} s'inverse et par conséquent aide les masselottes 131 à comprimer le deuxième moyen de liaison par friction 12 et même la plupart du temps les ressorts 121 donc également le premier moyen de liaison par friction 11 pour réaliser un fonctionnement en prise directe.

Pour des raisons de simplification, les figures 2 à 4 ne représentent pas le dispositif de marche arrière 14 et représentent, à la place, une simple denture de sortie 76, solidaire du porte-satellites 7.

Bien entendu, l'invention n'est pas limitée aux exemples décrits et représentés.

D'autres ressorts de rappel peuvent être prévus, par exemple un ressort tendant à écarter l'un de l'autre le premier et le troisième organe d'actionnement 111, 116, ou plus généralement à desserrer le premier moyen de liaison par friction 11.

La marche arrière pourrait être réalisée d'une manière différente de celle décrite, par exemple en immobilisant le porte-satellites 7, et en actionnant un crabot qui libérerait la couronne 6 de la roue libre 9 et raccorderait la couronne 6 avec l'arbre de sortie.

La disposition décrite, avec les deux moyens de liaison par friction 11 et 12 l'un autour de l'autre n'est pas limitative et on pourrait par exemple les aligner axialement.

## Revendications

1. Dispositif de transmission automatique, en particulier pour véhicule terrestre, comprenant :
- un élément rotatif d'entrée (3) et un élément rotatif de sortie (4);
- un premier (5) et un deuxième (6) élément denté qui engrènent chacun avec un troisième élément denté (7);
- des premier (11) et deuxième (12) moyens de liaison pour lier sélectivement un premier des éléments rotatifs d'entrée et de sortie avec le premier (5) et respectivement le deuxième (6) élément denté;
- un troisième moyen de liaison (74,76) pour lier le deuxième (4) des éléments rotatifs d'entrée et de sortie avec le troisième élément denté (7);
- des premier (8) et deuxième (9) moyens d'arrêt pour immobiliser sélectivement le premier (5) et respectivement le deuxième (6) élément denté;
- un premier organe d'actionnement (111) pour le premier moyen de liaison (11); et **caractérisé par**
- un deuxième organe d'actionnement (62) capable d'une première position dans laquelle le premier moyen de liaison (11) est capable d'un état de prise et d'un état désaccouplé, et le deuxième moyen de liaison (12) est désaccouplé, et d'une deuxième position dans laquelle le premier moyen de liaison (11) est désaccouplé et le deuxième moyen de liaison (12) est en état de prise.

2. Dispositif de transmission automatique selon la revendication 1, **caractérisé en ce que** dans la deuxième position, le deuxième organe d'actionnement (62) exerce sur le premier organe d'actionnement (111) une poussée dans le sens du désaccouplement du premier moyen de liaison (11).

3. Dispositif de transmission automatique selon la revendication 2, **caractérisé en ce que** ladite poussée est exercée par l'intermédiaire du deuxième moyen de liaison (12).

4. Dispositif de transmission automatique selon la revendication 3, **caractérisé en ce que** le premier organe d'actionnement (111) est en même temps organe de contre-appui pour le deuxième moyen de liaison (12) en état de prise.

5. Dispositif de transmission automatique selon.l'une des revendications 1 à 4, **caractérisé en ce que** le deuxième organe d'actionnement (62) est capable d'une troisième position dans laquelle le premier (11) et le deuxième (12) moyen de liaison sont en état de prise.

6. Dispositif de transmission automatique selon la revendication 5, **caractérisé en ce que** dans sa troisième position, le deuxième organe d'actionnement (62) sollicite un troisième organe d'actionnement (116) qui pousse le premier moyen de liaison (11) contre le premier organe d'actionnement (111).

7. Dispositif de transmission automatique selon la revendication 5 ou 6, **caractérisé par** un ressort précontraint (121) entre le deuxième organe d'actionnement (62) et le deuxième moyen de liaison (12).

8. Dispositif de transmission automatique selon la revendication 5 ou 6, **caractérisé par** un ressort précontraint (121) monté pour définir un seuil d'effort que le deuxième organe d'actionnement (62) doit surmonter pour passer de la deuxième à la troisième position.

9. Dispositif de transmission automatique selon l'une des revendications 1 à 4, **caractérisé en ce qu'**il comprend un troisième organe d'actionnement (116) monté pour mettre sélectivement le premier moyen de liaison (11) en état de prise en poussant le premier moyen de liaison (11) contre le premier organe d'actionnement (111).

10. Dispositif de transmission automatique selon l'une des revendications 1 à 9, **caractérisé en ce qu'**il comprend pour le premier organe d'actionnement (111) un premier moyen de commande (113) pour la mise en mouvement progressive du véhicule.

11. Dispositif de transmission automatique selon la revendication 10, **caractérisé en ce que** le premier moyen de commande (113) est de type centrifuge.

12. Dispositif de transmission automatique selon la revendication 11, **caractérisé en ce que** le premier moyen de commande (113) comprend des masselottes centrifuges (118) sensibles à la vitesse de l'élément rotatif d'entrée (3) et tendant à mettre le premier moyen de liaison (11) en état de prise.

13. Dispositif de transmission automatique selon l'une des revendications 1 à 12, **caractérisé en ce qu'**il comprend pour le deuxième moyen d'actionnement (62) un deuxième moyen de commande comprenant des masselottes centrifuges (131) sensibles à la vitesse de rotation du troisième élément denté (7) et/ou de l'élément de sortie (4).

14. Dispositif de transmission automatique selon l'une des revendications 1 à 13, **caractérisé en ce qu'**il comprend des moyens pour appliquer au deuxième organe d'actionnement (62), une poussée de denture (P_{A}) dans le sens du mouvement du deuxième organe d'actionnement (62) de la deuxième vers la première position.

15. Dispositif de transmission automatique selon la revendication 14, **caractérisé en ce que** le deuxième organe d'actionnement (62) est solidaire du deuxième élément denté (6).

16. Dispositif de transmission automatique selon l'une des revendications 1 à 15, **caractérisé en que** l'un au moins des premier (8) et deuxième (9) moyens d'arrêt est une roue libre.

17. Dispositif de transmission automatique selon l'une des revendications 1 à 16, **caractérisé en ce que** le premier élément denté (5) est une roue planétaire, le deuxième élément denté (6) est une couronne, le troisième élément denté (7) est un porte-satellites dont les satellites (72) engrènent avec la roue planétaire (5) et avec la couronne (6) .

18. Dispositif de transmission automatique selon l'une des revendications 1 à 17, **caractérisé en ce qu'**il comprend des moyens de marche arrière (14) qui, au moins indirectement, maintiennent sélectivement le deuxième organe d'actionnement (62) dans sa première position.

## Claims

1. An automatic transmission device, particularly for land vehicles, comprising:
- a rotational input element (3) and a rotational output element (4);
- a first (5) and a second (6) toothed element that each mesh with a third toothed element (7);
- first (11) and second (12) coupling means to selectively couple a first one of the rotational input and output elements with the first (5) and second (6) toothed elements respectively;
- a third coupling means (74, 76) to couple the second (4) of the two rotational input and output elements with the third toothed element (7);
- first (8) and second (9) stopping means to selectively immobilise the first (5) and second (6) toothed elements respectively;
- a first actuator (111) for the first coupling means (11); and **characterized by** :
- a second actuator (62) capable of a first position in which the first coupling means (11) is capable of an engaged state and a disengaged state, and the second coupling means (12) is disengaged, and a second position in which the first coupling means (11) is disengaged and the second coupling means (12) is in an engaged state.

2. An automatic transmission device according to claim 1, **characterised in that** in the second position, the second actuator (62) exerts thrust on the first actuator (111) in the direction of the disengagement of the first coupling means (11).

3. An automatic transmission device according to claim 2, **characterised in that** said thrust is exerted by the intermediary of the second coupling means (12).

4. An automatic transmission device according to claim 3, **characterised in that** the first actuator (111) is at the same time a counterbearing for the second coupling means (12) in an engaged state.

5. An automatic transmission device according to any one of claims 1 to 4, **characterised in that** the second actuator (62) is capable of a third position in which the first (11) and second (12) coupling means are in an engaged state.

6. An automatic transmission device according to claim 5, **characterised in that** in its third position, the second actuator (62) acts on a third actuator (116), which pushes the first coupling means (11) against the first actuator (111).

7. An automatic transmission device according to claim 5 or 6, **characterised by** a prestressed spring (121) between the second actuator (62) and the second coupling means (12).

8. An automatic transmission device according to claim 5 or 6, **characterised by** a prestressed spring (121) fitted to define a strength threshold that the second actuator (62) must exceed to move from its second to its third position.

9. An automatic transmission device according to any one of claims 1 to 4, **characterised in that** it has a third actuator (116) fitted to selectively place the first coupling means (11) in an engaged state by pushing the first coupling means (11) against the first actuator (111).

10. An automatic transmission device according to any one of claims 1 to 9, **characterised in that** it has for the first actuator (111) a first control means (113) for the gradual setting in motion of the vehicle.

11. An automatic transmission device according to claim 10, **characterised in that** the first control means (113) is of centrifugal type.

12. An automatic transmission device according to claim 11, **characterised in that** the first control means (113) has centrifugal flyweights (118) sensitive to the speed of the rotational input element (3) and tending to put the first coupling means (11) in an engaged state.

13. An automatic transmission device according to any one of claims 1 to 12, **characterised in that** it has for the second actuating means (62) a second control means with centrifugal flyweights (131) sensitive to the speed of rotation of the third toothed element (7) and/or the output element (4).

14. An automatic transmission device according to any one of claims 1 to 13, **characterised in that** it has means to apply thrust (P_{A}) produced by teeth to the second actuator (62) in the direction of the movement of the second actuator (62) from second to first position.

15. An automatic transmission device according to claim 14, **characterised in that** the second actuator (62) is attached to the second toothed element (6).

16. An automatic transmission device according to any one of claims 1 to 15, **characterised in that** at least one of the first (8) and second (9) stopping means is a free wheel.

17. An automatic transmission device according to any one of claims 1 to 16, **characterised in that** the first toothed element (5) is a sun wheel, the second toothed element (6) is a ring gear and the third toothed element (7) is a planet carrier on which the planet pinions (72) mesh with the sun wheel (5) and the ring gear (6).

18. An automatic transmission device according to any one of claims 1 to 17, **characterised in that** it has reversing means (14) which, at least indirectly, selectively hold the second actuator (62) in its first position.

## Patentansprüche

1. Automatisches Getriebe insbesondere für ein Bodenfahrzeug, umfassend:
- ein rotierendes Eingangselement (3) und ein rotierendes Ausgangselement (4);
- ein erstes (5) und ein zweites (6) gezahntes Element, die jeweils mit einem dritten gezahnten Element (7) kämmen;
- erste (11) und zweite (12) Verbindungsmittel, zur selektiven Verbindung eines ersten der rotierenden Eingangs- und Ausgangselemente mit dem ersten (5) bzw. dem zweiten (6) gezahnten Element;
- ein drittes Verbindungsmittel (74, 76) zur Verbindung des zweiten (4) der rotierenden Eingangs- und Ausgangselemente mit dem dritten gezahnten Element (7);
- erste (8) und zweite (9) Sperrmittel zur selektiven Blokkierung des ersten (5) bzw. des zweiten (6) gezahnten Elements;
- ein erstes Betätigungsorgan (111) für das erste Verbindungsmittel (11); und
**gekennzeichnet durch**
- ein zweites Betätigungsorgan (62), das eine erste Stellung einnehmen kann, in der das erste Verbindungsmittel (11) einen Eingriffszustand und einen ausgekuppelten Zustand einnehmen kann und das zweite Verbindungsmittel (12) ausgekuppelt ist, und eine zweite Stellung einnehmen kann, in der das erste Verbindungsmittel (11) ausgekuppelt ist und das zweite Verbindungsmittel (12) im Eingriffszustand ist.

2. Automatisches Getriebe nach Anspruch 1, **dadurch gekennzeichnet, dass** das zweite Betätigungsorgan (62) in der zweiten Stellung auf das erste Betätigungsorgan (111) einen Schub in der Richtung der Auskupplung des ersten Verbindungsmittels (11) ausübt.

3. Automatisches Getriebe nach Anspruch 2, **dadurch gekennzeichnet, dass** der Schub über das zweite Verbindungsmittel (12) ausgeübt wird.

4. Automatisches Getriebe nach Anspruch 3, **dadurch gekennzeichnet, dass** das erste Betätigungsorgan (111) gleichzeitig ein Abstützorgan für das zweite Verbindungsmittel (12) im Eingriffszustand ist.

5. Automatisches Getriebe nach einem der Ansprüche 1 bis 4, **dadurch gekennzeichnet, dass** das zweite Betätigungsorgan (62) eine dritte Stellung einnehmen kann, in der das erste (11) und das zweite (12) Verbindungsmittel im Eingriffszustand sind.

6. Automatisches Getriebe nach Anspruch 5, **dadurch gekennzeichnet, dass** das zweite Betätigungsorgan (62) in seiner dritten Stellung ein drittes Betätigungsorgan (116) beaufschlagt, das das erste Verbindungsmittel (11) gegen das erste Betätigungsorgan (111) drückt.

7. Automatisches Getriebe nach Anspruch 5 oder 6, **gekennzeichnet durch** eine vorgespannte Feder (121) zwischen dem zweiten Betätigungsorgan (62) und dem zweiten Verbindungsmittel (12).

8. Automatisches Getriebe nach Anspruch 5 oder 6, **gekennzeichnet durch** eine vorgespannte Feder (121), die so montiert ist, dass eine Kraftschwelle definiert wird, die das zweite Betätigungsorgan (62) überwinden muss, um von der zweiten in die dritte Stellung zu gelangen.

9. Automatisches Getriebe nach einem der Ansprüche 1 bis 4, **dadurch gekennzeichnet, dass** es ein drittes Betätigungsorgan (116) aufweist, das so montiert ist, dass es das erste Verbindungsmittel (11) selektiv in den Eingriffszustand bringt, indem es das erste Verbindungsmittel (11) gegen das erste Betätigungsorgan (111) drückt.

10. Automatisches Getriebe nach einem der Ansprüche 1 bis 9, **dadurch gekennzeichnet, dass** es für das erste Betätigungsorgan (111) ein erstes Steuermittel (113) für das allmähliche In-Bewegung-Setzen des Fahrzeugs aufweist.

11. Automatisches Getriebe nach Anspruch 10, **dadurch gekennzeichnet, dass** das erste Steuerelement ein Fliehkraftelement ist.

12. Automatisches Getriebe nach Anspruch 11, **dadurch gekennzeichnet, dass** das erste Steuermittel (113) Fliehgewichte (118) aufweist, die für die Geschwindigkeit des rotierenden Eingangselements (3) empfindlich sind und bestrebt sind, das erste Verbindungsmittel (11) in den Eingriffszustand zu bringen.

13. Automatisches Getriebe nach einem der Ansprüche 1 bis 12, **dadurch gekennzeichnet, dass** es für das zweite Betätigungsmittel (62) ein zweites Steuermittel aufweist, das Fliehgewichte (131) umfasst, die für die Drehgeschwindigkeit des dritten gezahnten Elements (7) und/oder des Ausgangselements (4) empfindlich sind.

14. Automatisches Getriebe nach einem der Ansprüche 1 bis 13, **dadurch gekennzeichnet, dass** es Mittel umfasst, um an das zweite Betätigungsorgan (62) einen Verzahnungsschub (P_{A}) in der Richtung der Bewegung des zweiten Betätigungsorgans (62) von der zweiten in die erste Stellung anzulegen.

15. Automatisches Getriebe nach Anspruch 14, **dadurch gekennzeichnet, dass** das zweite Betätigungsorgan (62) mit dem zweiten gezahnten Element (6) fest verbunden ist.

16. Automatisches Getriebe nach einem der Ansprüche 1 bis 15, **dadurch gekennzeichnet, dass** mindestens eines der ersten (8) und zweiten (9) Sperrmittel eine Freilaufkupplung ist.

17. Automatisches Getriebe nach einem der Ansprüche 1 bis 16, **dadurch gekennzeichnet, dass** das erste gezahnte Element (5) ein Sonnenrad, das zweite gezahnte Element (6) ein Kranz ist und das dritte gezahnte Element (7) ein Planetenradträger ist, dessen Planetenräder (72) mit dem Sonnenrad (5) und mit dem Kranz (6) kämmen.

18. Automatisches Getriebe nach einem der Ansprüche 1 bis 17, **dadurch gekennzeichnet, dass** es Rückwärtsgang-Mittel (14) aufweist, die das zweite Betätigungsorgan (62) mindestens indirekt selektiv in seiner ersten Stellung halten.
